(19) **Europäisches Patentamt**

**European Patent Office**

**Office européen des brevets**

(11) **EP 1 710 762 A1**

(12) **EUROPEAN PATENT APPLICATION**

(43) Date of publication:
**11.10.2006 Bulletin 2006/41**

(51) Int Cl.:
***G07F 19/00*** *(2006.01)*

(21) Application number: **05007802.1**

(22) Date of filing: **08.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | • **Albrecht, Norbert**<br>**16341 Panketal (DE)** |
| (71) Applicant: **First Data Corporation**<br>**Greenwood Village, CO 80111 (US)** | (74) Representative: **Beyer, Andreas**<br>**Wuesthoff & Wuesthoff**<br>**Patent- und Rechtsanwälte**<br>**Schweigerstrasse 2**<br>**81541 München (DE)** |
| (72) Inventors:<br>• **Kubo, Dr. Takayuki**<br>**71083 Herrenberg (DE)** | |

(54) **System and method for authorizing electronic payment transactions**

(57)    A transaction authorization system comprises an authorization engine (18) configured to perform an analysis in relation to a received request for authorization of a first-type electronic payment transaction and generate an authorization output based on the analysis, and a database (22) storing a plurality of transaction records for second-type electronic payment transactions. The authorization engine (18) is configured to access the database (22) to derive information from one or more of the transaction records stored therein and perform the analysis based on the derived information. Preferably, the authorization engine (18) comprises a first sub-engine (24) configured to determine a plurality of conditional probabilities based on a sample set of transaction records from the database (22), wherein the conditional probabilities are indicative of a probability of one or more realizations of one or more first transaction attributes under the condition of one or more realizations of one or more second transaction attributes, wherein at least one of the one or more first transaction attributes is related to a transaction request answer code.

Fig. 1

**Description**

The present invention relates to a system and method for authorizing electronic payment transactions.

As used herein, the term "payment transaction" is to be understood as referring to an action or set of actions having as its goal the electronic transfer of money or other values from a payor's account to a payee's account. "Electronic transaction" means a transaction that is conducted, in whole or in part, by electronic means or electronic records. The transaction may be conducted using wireless and/or wired communications technology. For example, the Internet, a public switched telephone network, a wide area network, a local area network, a virtual private network, and other types of communications networks and/or links may be utilized for performing an electronic payment transaction.

Electronic payment transactions frequently require authorization by a designated entity prior to execution of the transaction. The authorization entity may perform some form of analysis related to the requested transaction and, depending on the result of the analysis, render a decision whether to decline or authorize the payment transaction. The quality of the analysis is determinative of the error rate of the decision. That is, the better the analysis, the smaller the number of transactions that were erroneously approved and also the smaller the number of transactions that were erroneously declined.

Erroneous decisions by a payment transaction authorization entity may give rise to increased signal traffic and data processing. For example, erroneous approval of a payment transaction request may result in reversal of the authorized transaction after execution thereof. Reverse transactions stemming from erroneous authorizations cause additional signal traffic and consume additional processing time and resources in the communications and data processing infrastructure used for processing electronic payment transactions. In view of the finite computing and routing capacity of existing computer network systems, there is a high desire to keep unnecessary signal traffic and data processing caused by erroneous decisions of a payment transaction authorization entity low.

It is therefore an object of the present invention to provide a transaction authorization system and method which allow to achieve improved decision reliability to thereby prevent increased load on existing computing and network resources.

In one aspect, the present invention provides a transaction authorization system, comprising:

- an authorization engine configured to perform an analysis in relation to a received request for authorization of a first-type electronic payment transaction and generate an authorization output based on the analysis,
- a database storing a plurality of transaction records for second-type electronic payment transactions,

wherein the authorization engine is configured to access the database to derive information from one or more of the transaction records stored therein and perform the analysis based on the derived information.

In another aspect, the present invention provides a transaction authorization method, comprising:

- receiving a request for authorization of a first-type electronic payment transaction,
- providing a database storing a plurality of transaction records for second-type electronic payment transactions,
- deriving information from one or more of the transaction records stored in the database,
- performing an analysis in relation to the received authorization request based on derived information, and
- generating an authorization output based on the analysis.

As used herein, first-type electronic payment transactions and second-type electronic payment transactions represent alternative manners of making an electronic payment.

In one embodiment of the present invention, at least one of the first-type and second-type electronic payment transactions is a card-initiated transaction where "card" refers to a card-shaped means of making electronic payments. Debit cards and credit cards are conventionally known examples of payment cards. The payment card may include, in computer-readable form, information identifying an account of the card holder. This information may be stored, e.g., in a magnetic strip provided on the card or a chip integrated into the card. Card terminals located at merchant sites may be configured to read the identification information from customer's payment cards.

Various payment methods have been devised and implemented on the basis of payment cards. Among them, a signature-based electronic debit payment method and an identification code-based electronic debit payment method have attained widespread acceptance by market participants. In identification code-based debit payment, the card holder enters a personal identification number (PIN) into a keypad or keyboard of a card terminal. In an online version of the PIN payment method, the PIN number is transmitted via an online connection to an electronic authorization center of the card issuing bank along with such information as an account identifier identifying the card holder's account and the amount due. The bank's authorization center checks the PIN number and also whether the account has sufficient funds to collect the requested amount. If the card is valid and sufficient funds are available, the authorization center effects payment, and an "ok" message is sent to the terminal. Otherwise, the authorization center declines payment. There is also known an offline version of PIN-based debit payment where the PIN number is checked by the card at the point of sale (POS) and may be checked, alternatively or additionally, by the authorization center of the card issuing bank at a later time not correlated with the time of input of the PIN by the card holder.

In signature-based debit payment, no PIN is entered by the card holder as confirmation of the payment. Instead, the card holder provides a signature on a receipt printed by the terminal. The terminal reads the card holder's account data from the card's magnetic strip or chip and stores the read information along with the amount due in a payment data set. This data set may thereafter be forwarded to the issuing bank of the debit card to collect the amount due from the card holder's account.

The above signature-based debit payment method may be enhanced by an online authorization check. To this end, the terminal sends a request message including the account data read from the debit card to an authorization entity which checks whether the requested transaction can be authorized. The authorization entity may hold a list of stolen or otherwise prohibited debit cards for which no payment approval must be allowed.

In the context of the present invention, a signature-based debit payment transaction and an identification code-based debit payment transaction represent a preferred embodiment of a first-type payment transaction and second-type payment transaction, respectively. A person versed in the art, however, will readily appreciate that other types of payment transactions may exist that can be likewise considered as first and second-type payment transactions. As a further debit payment method, for example, there is known a cardless method in which a payor uses a graphical user interface displayed on a display device of a computer terminal to enter his or her account information and confirms the payment electronically by clicking on a button or providing a digital signature. An electronic payment transaction occurring as part of such a cardless payment method may represent another embodiment of a first-type payment transaction in the context of the present invention. It is further to be noted that the present invention may find application also with respect to a payment method other than debit payment. For example, it is conceivable to apply the present invention for authorizing a cheque-based payment transaction as a first-type payment transaction.

An authorization system responsible for authorizing a payment transaction may have no, or no immediate, access to account information of a payor in the transaction. Decisions of the authorization system are then subject to uncertainty and may prove erroneous. For example, it may occur that an authorization system for signature-based debit payment transactions or other "PIN-less" payment transactions grants a payment request not knowing that the payor's account lacks sufficient funds. In such a case, a reverse transaction may follow in order to re-collect a balance that may have already been credited to the payee's account. It has been found that such reverse transactions may cause considerable signal traffic and consume considerable computing power in existing payment transaction processing infrastructure, which signal traffic and computing power could be saved and otherwise utilized if a more reliable authorization decision was available. Here, "authorization decision" generally refers to the decision output by the authorization system, whether positive, negative or anything between.

To achieve a more reliable authorization decision, the authorization engine in the transaction authorization system of the present invention accesses a database containing a history log of second-type payment transactions, derives information from at least some of the transaction records stored in the database, and performs its analysis based on the derived information. The transaction records in the database preferably include records for second-type transactions that were successfully completed as well as records for second-type transactions that failed for one or the other reason. The transaction records may specify, for each second-type payment transaction, such transaction details as a payor account identifier, a transaction time, a transaction date, a transaction amount, a transaction request answer code, location information, etc. The transaction request answer code indicates an answer returned from a remote further authorization system in response to a request for authorization of a second-type payment transactions. There may be defined a plurality of transaction request answer codes each indicative of a different answer of the further authorization system. In this way, not only approval or denial of a requested second-type payment transaction can be communicated by the further authorization system, but more detailed information such as a reason of denial. It is to be understood that the above transaction details are but examples of that may be registered in the transaction history data.

The transaction records in the database may stem from second-type payment transactions from within a predetermined term prior to the present, for example, from the last week, month or year. The database may alternately contain transaction records from an infinite period of time. In a preferred embodiment of the present invention, a score is determined for a requested first-type payment transaction based on the information derived from the transaction records in the database, wherein the score indicates a likelihood that the requested first-type payment transaction will fail or can be successfully completed. It has been found that the use and evaluation of history data for second-type payment transactions can greatly improve the reliability of authorization decisions for first-type payment transactions and consequently reduce overall signal traffic related to payment processing.

In one embodiment, a first sub-engine of the authorization engine is arranged to perform statistics on a sample set of transaction records from the database. The statistics preferably include the determination of a plurality of conditional probabilities, wherein the conditional probabilities are indicative of a probability of one or more realizations of one or more first transaction attributes under the condition of one or more realizations of one or more second transaction attributes. At least one of the one or more first transaction attributes may be related to the above discussed transaction request answer code.

As indicated above, a second-type payment transaction may be defined by a set of one or more parameters in the associated transaction record. The time, date and amount of the transaction, the payor account identifier, the transaction request answer code, a location identifier, a terminal identification code and a merchant type code are examples of parameters that may be encountered in a practical application and used to define a second-type payment transaction.

One or more transaction attributes may be defined using one or more of the transaction record parameters. As an example, one transaction attribute may be defined by the transaction request answer code. Different realizations (states, values, ranges of value) of this attribute may be defined depending on the value of the transaction request answer code. Another transaction attribute may be defined by the transaction amount, and there may be equally defined different realizations of the attribute 'transaction amount' depending on the value of the transaction amount. For example, the attribute 'transaction amount' may have a first realization for a value of the transaction amount from € 0,- to € 50,-, a second realization for a value of the transaction amount from greater than € 50,- to 100,-, a third realization for a value of the transaction amount from greater than € 100,- to € 200,-, and so forth.

Yet another transaction attribute may be defined, e.g., by a difference between the transaction dates of two successive second-type payment transactions for the same payor account. Again, there may be defined different realizations of the attribute 'transaction date difference' depending on the value of the difference between two transaction dates. For example, this attribute may have a first realization for a value of the transaction date difference between 0 and 2 days, a second realization for a value of the transaction date difference from more than 2 days to one week, a third realization for a value of the transaction date difference from more than one week to two weeks, and so forth.

Still another transaction attribute may be defined, e.g., by a difference between the transaction times of two successive second-type payment transactions for the same payor account. As above, there may be defined different realizations of the attribute 'transaction time difference' depending on the value of the difference between two transaction times. For example, this attribute may have a first realization for a value of the transaction time difference between 0 and 1 hour, a second realization for a value of the transaction time difference from more than 1 hour to 2 hours, a third realization for a value of the transaction time difference from more than 2 hours to 4 hours, and so forth.

In this regard, the transaction time may include an indication of the hour, minute, and possibly second of the respective payment transaction, whereas the transaction date may have a resolution no smaller than a day.

In a preferred embodiment, at least one of the one or more second transaction attributes is related to the transaction request answer code of a temporally later second-type payment transaction and at least one of the one or more second transaction attributes is related to the transaction request answer code of a temporally earlier second-type payment transaction.

The conditional probabilities may be determined in different ways. They may be calculated from the frequencies of respective realizations of the first and second transaction attributes in the sample set of transaction records. Alternately, the probabilities may be determined using neural networks and/or Bayes networks as are generally known in the field of artificial intelligence.

Once determined, the conditional probabilities may be stored so as to be accessible to a second sub-engine of the authorization engine, e.g., in a further database. The second sub-engine is designed to select one from the plurality of conditional probabilities based on information contained in the received authorization request, determine a first checking result value based on the selected conditional probability and generate the authorization output based on the first checking result value.

In the process of selecting one from the plurality of conditional probabilities, the second sub-engine of the authorization engine may query the transaction record database for information related to one or more transaction records including a specific payor account identifier that identifies a same account as a payor account identifier included in the received authorization request. In this way, it can be determined if there are any transaction records in the database that relate to the same payor account as indicated in the received request. In case the database contains one or more transaction records of previous second-type payment transactions for a specific payor account, the selection of a conditional probability may be based on a transaction request answer code included in one or more transaction records having the specific payor account identifier and/or on one or more other transaction parameters included in the respective transaction record(s). In a preferred embodiment, the second sub-engine queries the database for information related to one or more most recent second-type payment transactions for the specific payor account.

The payor account identifier may, e.g., include account data comprising an account number and a bank identification number. Other information uniquely identifying a payor account may be used as the payor account identifier as well.

As the content of the database may change due to new registrations of transaction records, provision may be made for the re-determination of one or more of the plurality of conditional probabilities every predetermined time interval and/or whenever a predetermined number of transaction records have been newly registered in the database.

The second sub-engine of the authorization engine may be further designed to access a stored list of account identifiers and compare a payor account identifier included in the received authorization request against the list. In this way, the authorization engine may determine whether the payor account identified in the received authorization request is registered in a negative list of prohibited accounts or a positive list of eligible accounts. Based on the result of the comparison, the second sub-engine may then determine a second checking result value and generate the authorization output based on a weighed sum of the first and second checking result values. The weights associated with the first and second checking result values may be adjustably set in the authorization engine.

The authorization system of the present invention may comprise a host configured to receive authorization requests for first-type payment transactions and second-type payment transactions, forward the authorization requests for first-type payment transactions to the authorization engine, and route the authorization requests for second-type payment transactions to a remote further transaction authorization system. The host is coupled to the database and registers a transaction record for every requested second-type payment transaction in the database.

A computer-readable information storage medium in accordance with the present invention includes stored program code means adapted to effect, when executed by a computer system, execution of the methodology discussed above. The information storage medium may, e.g., be in the form of an optical or magnetic disk storing the program code means. The program code means can also be available in the form of a signal transmitted in a communications system. The signal may be an electric or electromagnetic signal transmitted through wired or wireless media and representing a sequence of instructions forming the program code means.

The invention will be explained further in conjunction with the accompanying drawings, in which:

Fig. 1 illustrates a schematic block diagram of a portion of an exemplary architecture for processing electronic card payment transactions;

Fig. 2 shows an exemplary table of frequencies of pairs of temporally consecutive answer codes to PIN-based debit card payment transactions; and

Fig. 3 shows an exemplary transition probability matrix calculated based on the data in the table of Fig. 2.

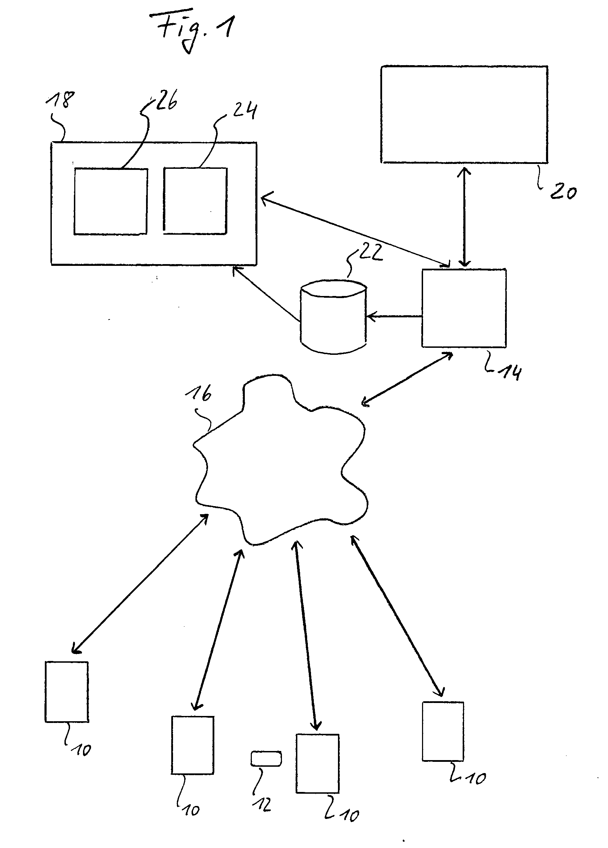

In Fig. 1, a plurality of card terminals 10 are depicted, which are configured to read stored information from a payment card such as schematically indicated at 12. The terminals 10 may be situated at a plurality of merchant sites. In a debit payment method, the read information may include account data consisting of an account number of the holder of the card and a bank identification code. The terminals 10 are communicably coupled to a host server 14 across a communications network 16. The host server 14 is communicably coupled to a first authorization engine 18 and one or more second authorization engines 20. The second authorization engines 20 are comprised in one or more remotely located further authorizations systems.

The communications network 16 may include, e.g., at least one of a land-line public switched telephone network, a mobile communications network such as according to the GMS or UTMS standard or any other conventionally known mobile communications standard, the Internet, a proprietary communications network, a wide area network, etc.

The term "engine" as used herein refers to a mechanism implemented by suitable hardware and/or software and designed to perform one or more predefined processes.

The first authorization engine 18 is destined to check incoming authorization requests for first-type payment transactions, whereas the one or more second authorization engines 20 are destined to check incoming authorization requests for second-type payment transactions. Such first-type and second-type payment transactions represent alternative ways of transferring a payment amount. The following description specifically envisages a scenario where signature-based debit card payment transactions are first-type payment transactions and PIN-based debit card payment transactions are second-type payment transactions. In such a scenario, the first authorization engine 18 may have no access to account information of debit card holders, while the one or more second authorization engines 20 have access to such account information, enabling them to determine whether a requested payment amount can be collected from a card holder's account.

One or more of the card terminals 10 may be configured to support signature-based debit card payment transactions only. One or more other card terminals 10 may be configured to support PIN-based debit card payment transactions only. Some of the card terminals 10 may be configured to support both signature-based debit card payment transactions and PIN-based debit card payment transactions.

In a signature-based debit card payment method with online authorization, a terminal 10 reads account data from a debit card and establishes a communication connection to the host server 14. The terminal transmits an authorization request message to the host server 14 via the communication connection. Included in the authorization request message are the account data read from the debit card and possibly further information. The host server 14 receives the authorization request message and forwards it to the first authorization engine 18. The first authorization engine 18 checks the authorization request online and returns a response message, which is transmitted via the host server 14 to the requesting terminal 10. The response message includes an authorization decision based on the result of the analysis performed by the first authorization engine 18.

After receipt of the response message from the first authorization engine 16, the terminal 10 or host server 14 may transmit a debit data set including all relevant transaction data to a bank's payment processing system to settle the outstanding debt. In case of insufficient funds on the card holder's account, the card issuing bank may electronically decline to debit the balance due to the card holder's account. This may result in the merchant's bank annulling a credit it may already have posted on the merchant's account. It will be easily appreciated by one of ordinary skill in the art that the signal traffic involved in such a reverse transaction could be avoided if the authorization decision from the first authorization engine 18 was more reliable.

In a PIN-based debit card payment method, a terminal 10 transmits an authorization request message to the host server 14 similarly to the signature-based debit card payment method. However, the authorization request message additionally includes a PIN as input by the card holder at the terminal. The host server 14 is programmed to route the message to the second authorization engine 20 (or, if plural second authorization engines 20 are provided, an appropriate one of the plural engines). The second authorization engine 20 checks the PIN and also whether the card holder has sufficient funds in his or her account. It returns a response message, which is transmitted via the host server 14 to the requesting terminal. Included in the response message from the second authorization engine 20 is an answer code that identifies a type of answer.

There may be defined a plurality of different answer codes. For example, an answer code 'AA' may indicate successful completion of the requested payment. An answer code 'AB' may indicate that the presented card is not registered with the bank operating the addressed second authorization engine. An answer code 'AC' may indicate that the bank code included in the transmitted information is not valid. An answer code 'AD' may indicate that the payment amount is inadmissibly high. An answer code 'AE' may indicate that the addressed second authorization engine has reason to assume some form of manipulation of the card. An answer code 'AF' may indicate that an incorrect PIN has been input. An answer code 'AG' may indicate that the card has expired. An answer code 'AH' may indicate a blocked card. An answer code 'AI' may indicate that an incorrect PIN has been input a maximum allowable number of, say, three times in a row. The answer codes 'AB' through 'AI' indicate rejection of the requested PIN-based payment transaction for one or the other reason, whereas answer code 'AA' indicates that the requested transaction was authorized.

It is to be understood that the above answer codes are merely given by way of example and are not intended to be limiting to the present invention. There may be defined numerous other answer codes having different meanings. The present invention envisages the use of answer codes that follow standard convention in the industry.

A database 22 is shown in Fig. 1 which stores a history log of PIN-based debit card payment transactions routed via the host server 14. In a preferred embodiment, the database 22 is mairitained by the host server 14, which may update the database 22 whenever it receives an authorization request message for a new PIN-based debit card payment transaction.

The history log in the database 22 is comprised of a transaction record for each PIN-based debit card payment transaction. Each transaction record includes a plurality of transaction parameters related to the respective PIN-based transaction.

These parameters include the answer code returned from the appropriate second authorization engine 20 and further such parameters as the transaction time, transaction date and transaction amount, a merchant type code, a merchant country code, a location of the requesting terminal, a terminal identification code, etc. Moreover, each transaction record includes account information of a payor in the respective PIN-based transaction. This account information may be comprised of the card holder's account number, a bank identification code, and possibly further data. Thus, the database 22 stores a plurality of data sets, each including details of a PIN-based debit card payment transaction.

The database 22 is accessible to the first authorization engine 18. One of the functionalities of the first authorization engine 18 is to perform statistics on part or all of the data stored in the history data. To this end, the first authorization engine 18 includes a first sub-engine 24 designed to carry out a process of performing such statistics. The first sub-engine 24 is referred to hereinafter as a statistics sub-engine. Based on the statistics, a second sub-engine 26 included in the first authorization engine 18 may determine a score for a requested signature-based payment transaction, wherein the score indicates a likelihood of the requested transaction to fail or successfully complete. The second sub-engine 26 is referred to hereinafter as a checking sub-engine.

The statistics performed by the statistics sub-engine 24 include the determination of a plurality of conditional probabilities $P\{A[a_i] \mid B[b_j], C[c_k], D[d_l] \ldots \}$. In this expression, $A[a_i]$ represents a first transaction attribute having a realization $a_i$ and $B[b_j], C[c_k], D[d_i] \ldots$ represent one or more second transaction attributes B, C, D ... having realizations $b_j, c_k, d_l \ldots$, respectively. Accordingly, $P\{A[a_i] \mid B[b_j], C[c_k], D[d_l] \ldots\}$ represents a probability of the occurrence of the realization $a_i$ of the first transaction attribute A under the condition of the realizations $b_j, c_k, d_l \ldots$ of the second transaction attributes B, C, D ....

In one embodiment, at least some of the conditional probabilities determined by the statistics sub-engine 24 involve a single second attribute only. Accordingly, these conditional probabilities are of the form $P\{A[a_i] \mid B[b_j]\}$. In other embodiments, at least some of the conditional probabilities determined by the statistics sub-engine 24 involve two ore more second attributes.

In a preferred embodiment, the above discussed transaction parameter 'answer code' is used as the first transaction attribute A, and the statistics sub-engine 24 determines conditional probabilities for the occurrence of a "good" answer code, meaning an answer code that indicates successful completion of a PIN-based transaction. With reference to the above example values of the answer code, a "good" answer code may, e.g., be 'AA'. The statistics sub-engine 24 may then determine conditional probabilities $P\{$answer code ['AA'] $\mid B[b_j] ... \}$, i.e., the probability of the occurrence of the realization 'AA' of the attribute 'answer code' under the condition of a particular realization of one or more second transaction attributes. In a case where two or more "good" answer code values are defined, the statistics sub-engine 24 may determine the conditional probabilities as indicating a probability of the occurrence of any one from the plural "good" answer code values.

The number of conditional probabilities to be determined by the statistics sub-engine 24 depends on the number of possible realizations (states, bins, values, ranges of values) considered for each second attribute. For example, considering a case where the conditional probabilities are of form $P\{$answer code ['AA'] $\mid B[b_j]\}$ and ten different realizations are considered for the single second attribute B, i.e., $j \in (1, ... 10)$, then ten conditional probabilities are determined by the statistics sub-engine 24. On the other hand, in the case of conditional probabilities of form $P\{$answer code ['AA'] $\mid B[b_j], C[c_k]\}$ and ten different realizations being considered for the second attribute B (i.e., $j \in (1, ... 10)$) and fifteen different realizations being considered for the second attribute C (i.e., $k \in (1, ... 15)$), the statistics sub-engine 24 determines a number 150 of conditional probabilities, one for each combination of realizations of the second attributes B and C.

In the following, various examples of conditional probabilities are given that may be determined by the statistics sub-engine 24. As a first example, the statistics sub-engine 24 may determine probabilities $P\{$answer code_0 ['AA']$\mid$ answer code_1 [ac1_i]$\}$, wherein the attributes 'answer code_0' and 'answer code_1' refer to the answer codes in two immediately successive PIN-based transactions for the same account and $ac1_i$ specifies a particular realization of the attribute 'answer code_1'. Thus, the expression $P\{$answer code_0 ['AA'] $\mid$ answer code_1 [ac1_i]$\}$ is representative of a probability that a current PIN-based transaction receives the answer code 'AA' under the condition that the answer code in the most recent PIN-based transaction for the same account had the realization 'ac1_i'. The statistics sub-engine 24 may consider only a selected sub-set from the entire set of potentially occurring code values as relevant realizations of the attribute 'answer code_1'. For example, the statistics sub-engine 24 may determine conditional probabilities only for transitions from the above indicated "bad" code values 'AB', ... 'AI' to the "good" code value 'AA', although there may be defined numerous other possible values of the answer code.

As a second example, the statistics sub-engine 24 may determine probabilities $P\{$answer code_0 ['AA'] $\mid$ answer code_1 [ac1_i], answer code_2 [ac2_j]$\}$, wherein the attributes 'answer code_0', 'answer code_1' and 'answer code_2' refer to the answer codes in three temporally successive PIN-based transactions for the same account.

As a third example, the statistics sub-engine 24 may determine probabilities $P\{$answer code_0 ['AA'] $\mid$ transaction amount [ta_i], transaction time [tt_j], transaction date [td_k]$\}$, wherein the attributes 'transaction amount', 'transaction time' and 'transaction date' refer to the amount, time and date of the transaction and $ta_i$, $tt_j$, $td_k$ designate specific realizations (e.g., ranges of value) of these parameters. Thus, the expression $P\{$answer code_0 ['AA'] $\mid$ transaction amount [ta_i], transaction time [tt_j], transaction date [td_k]$\}$ is representative of a probability that a current PIN-based transaction having amount $ta_i$, time $tt_j$ and date $td_k$ receives 'AA' as the answer code.

As a further example, the statistics sub-engine 24 may determine probabilities $P\{$answer code_0 ['AA'] $\mid$ transaction time difference_1 [dt1_i], transaction date difference_1 [dd1_j]$\}$, wherein the attribute 'transaction time difference_1' refers to the time difference between two immediately successive PIN-based transactions for the same account and the attribute 'transaction date difference_1' refers to the difference in date between two immediately successive PIN-based transactions for the same account. The expression $P\{$answer code_0 ['AA'] $\mid$ transaction time difference_1 [dt1_i], transaction date difference_1 [dd1_j]$\}$ is thus representative of a probability that a current PIN-based transaction receives the answer code 'AA' under the condition that the time difference and the difference in date from the most recent PIN-based transaction for the same account have the realizations 'dt1_i' and 'dd1_j'.

In one preferred embodiment, the statistics sub-engine 24 may determine conditional probabilities $P\{$answer code_0 ['AA'] $\mid$ answer code_1 [ac1_i], answer code_2 [ac2_j], transaction date difference_1 [dd1_k], transaction date difference_2 [dd2_l]$\}$, which represents a probability that a current PIN-based transaction receives the answer code 'AA' under the condition that the last and the second-last PIN-based transactions for the same account received the answer codes 'ac1_i' and 'ac2_j', respectively, and that the differences in date from the last and the second-last PIN-based transaction for the same account have the realizations 'dd1_k' and 'dd2_l'.

In another preferred embodiment, the statistics sub-engine 24 may determine conditinal probabilities $P\{$answer code_0 ['AA'] $\mid$ answer code_1 [acl1_i], transaction amount [ta_j], transaction time difference_1 [dt1_k], transaction date difference_1 [dd1_l]$\}$, which represents a probability that a current PIN-based transaction having amount $ta_j$ receives the answer code 'AA' under the condition that the last PIN-based transaction for the same account received the answer

code 'ac1$_i$' and that the time difference and the difference in date from the last PIN-based transaction for the same account have the realizations 'dt1$_k$' and 'dd1$_l$'.

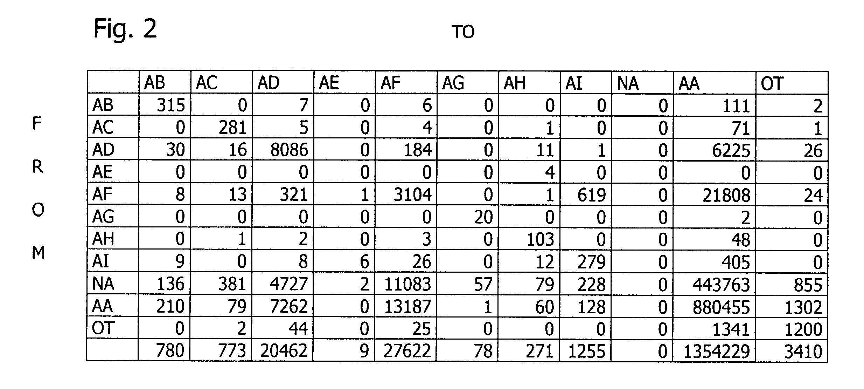

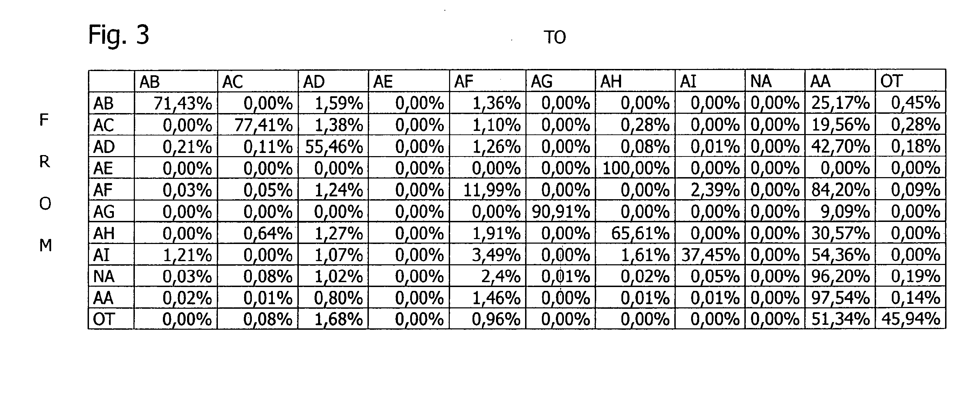

In the following, principles of one methodology for determining conditional probabilities will be explained by way of example with reference to Figs. 2 and 3. In the example considered, transition probabilities P{answer code_0 [ac0$_i$] | answer code_1 [ac1$_j$]} are determined through exact calculation from a sample set of transaction records related to PIN-based transactions. To this end, it is counted how often respective answer code transitions in two immediately successive PIN-based transactions for the same account are observed in the sample data. In this way, a table such as exemplarily shown in Fig. 2 may be obtained. The left-most column in the table of Fig. 2 indicates various previous realizations of the answer code, whereas the upper row indicates subsequent realizations of the answer code. NA and OT stand for "not available" and "others", respectively.

In the sample data used for establishing the table of Fig. 2, 315 occurrences of the answer code transition AB→AB and 111 occurrences of the answer code transition AB→AA) were found, for example. The entire number of answer code transitions having 'AB' as their starting answer code realization was 441. Thus, in 315 out of 441 cases, the answer code 'AB' was received in response to an authorization request for a PIN-based transaction after the same answer code was already received upon an immediately preceding authorization request for the same account. On the other hand, in 111 out of 441 cases, the answer code 'AA' was received in response to an authorization request for a PIN-based transaction after the answer code 'AB' was received upon an immediately preceding authorization request for the same account.

Based on the numbers in the table of Fig. 2, probabilities for the respective answer code transitions can be easily calculated. This is done by dividing the number of a particular answer code transition by the total number of answer code transitions having the same previous (starting) code realization as the particular transition. For example, to obtain the conditional probability for the transition AB→AB), the number of this transition in the sample data, 315, is divided by the total number of answer code transitions having 'AB' as their starting code realization, 441, as can be calculated by summing all the numbers in the 'AB' row in the table of Fig. 2. The result of the division is 0,7143, i.e., a transition probability of 71,43%. Similarly, the probability of the answer code transition AB→AA is calculated as 111/441 = 0,2517, i.e., 25,17 %.

In the above manner, probabilities for all answer code transitions listed in the table of Fig. 2 can be easily calculated. The resulting probability table is shown in Fig. 3. One can see, for example, that an answer code transition AH→AA occurs at a probability of 30,57%, whereas an answer code transition AF→AA has 84,20% probability.

A person of ordinary skill in the art will readily appreciate that the above explained methodology can be applied also to other transaction attributes. The skilled person will further appreciate that methodologies other than calculation through counting and dividing are conceivable in order to determine the conditional probabilities such as, e.g., a neural network or a Bayes network.

The sample set of transaction records used by the statistics sub-engine 24 in order to perform the statistics may include the entirety of records stored in the database 22. Alternately, the statistics sub-engine 24 may base the statistics on a part number of the records in the database 22. For example, the statistics sub-engine 24 may base the probability determination on records originating from only a predetermined most recent period of time, say, from the last day, week, month or year.

The statistics sub-engine 24 may renew the statistics under one or more predetermined conditions. One such condition may be that a predetermined time interval has elapsed. In this case, the statistics sub-engine 24 may re-determine the conditional probabilities periodically. The time interval may, e.g., be one day, one week, or one month. An alternate condition may be that a predetermined number of PIN-based transactions (whether successful or rejected) have been newly registered in the database 22. The statistics sub-engine 24 may then re-determine the probabilities, e.g., every hundred, every thousand or every ten thousand new registrations in the database 22. It is even conceivable that the statistics sub-engine 24 re-determines the probabilities whenever a new registration occurs in the database 22.

The statistics sub-engine 24 effects storage of the various conditional probabilities at a suitable storage location accessible to the checking sub-engine 26. A database may be conveniently used as the storage location for the conditional probabilities.

Although the statistics sub-engine 24 performing the determination of the conditional probabilities has been described above as being included in the first authorization engine 18, this function can be likewise provided by the host server 14, in which case the host server 14 effects storage of the conditional probabilities at a location accessible to the checking sub-engine 26.

The checking sub-engine 26 is designed to score an incoming authorization request for a signature-based transaction based on the conditional probabilities. To this end, the checking sub-engine 26 selects one of the conditional probabilities based on information contained in the received request and determines a first checking result value from the selected probability.

In one embodiment, the process of selecting a conditional probability may include accessing the database 22 by the checking sub-engine 26 to determine if there are any stored transaction records for the same payor account as identified in the received authorization request. If it is determined that one or more such transaction records exist in the database 22, the checking sub-engine 26 obtains information related to one or more of the transaction parameters included in one or more most recent transaction records for that payor account from the database 22. For example, if the conditional probabilities determined by the statistics sub-engine 24 involve the answer code of an immediately previous PIN-based transaction as a second transaction attribute (i.e., answer code_1[ac1$_i$]), the checking sub-engine 26 queries the database 22 so as to obtain information on the answer code included in a most recent transaction record having the same payor account as identified in the received authorization request. As another example, if the conditional probabilities determined by the statistics sub-engine 24 have a second transaction attribute that is related to the transaction time or date of an immediately previous PIN-based transaction (e.g., transaction time difference_1 [dt1$_i$], transaction date difference_1 [dd1$_j$]), the checking sub-engine 26 queries the database 22 so as to obtain information on the transaction time and/or date indicated of a most recent PIN-based transaction for the same payor account as identified in the received authorization request.

On the other hand, if the conditional probabilities determined by the statistics sub-engine 24 relate to transaction parameters of a current PIN-based transaction only, as is the case, e.g., with probabilities P{answer code_0 ['AA'] | transaction amount [ta$_i$], transaction time [tt$_j$], transaction date [td$_k$]}, no querying of the database 22 is required to enable the checking sub-engine 26 to select an appropriate one from the stored conditional probabilities. In such a case, the checking sub-engine 26 obtains all selection information needed for selecting a conditional probability, e.g., the transaction amount and/or date and/or time, directly from the received authorization request.

The checking sub-engine 26 determines the first checking result value from the selected conditional probability. The first checking result value may thus represent a likelihood that the requested signature-based transaction will be successfully completed. The checking sub-engine 26 may generate the authorization output based on only the first checking result value. In a preferred embodiment, however, the checking sub-engine 26 performs one or more additional checking procedures to derive one or more further checking result values, which it combines with the first checking result value to generate the authorization output. Specifically, the checking sub-engine 26 may check the incoming authorization request against a negative list of prohibited accounts and/or a positive list of eligible lists to thereby determine whether the payor account identified in the request is blocked, e.g., due to fraudulent use of a payment card in the past. A second checking result value may thus indicate whether or not a payor account to which an incoming authorization request is directed is prohibited or eligible. If, e.g., an allowable range of values between 0 and 1 is assumed for the first checking result value, the second checking value may be either 0 or 1 depending on the result of comparison.

The checking sub-engine 26 may combine the various checking result values in a weighted manner as follows:

$$v = a_1 v_1 + a_2 v_2 + \ldots a_n v_n$$

wherein $v_1$ represents the first checking result value, $a_1$ represents a weight given to the first checking result value, $v_2$ represents the second checking result value, $a_2$ represents a weight given to the second checking result value, $v_n$ represents a n-th checking result value and an represents a weight given to the n-th checking result value. The total value v thus obtained may then be returned by the first authorization engine 18 as an authorization result to the requesting terminal 10. In an alternate embodiment, the checking sub-engine 26 may perform a threshold comparison by comparing the total value v with one or more predetermined threshold values and return a "yes" or "no" decision as the authorization result based on the threshold comparison. The threshold value(s) may be adjustably set in the first authorization engine 18. There may be defined different threshold values for different market segments, industries or merchants.

**Claims**

1. A transaction authorization system, comprising:

    - an authorization engine (18) configured to perform an analysis in relation to a received request for authorization of a first-type electronic payment transaction and generate an authorization output based on the analysis,
    - a database (22) storing a plurality of transaction records for second-type electronic payment transactions,

wherein the authorization engine (18) is configured to access the database (22) to derive information from one or more of the transaction records stored therein and perform the analysis based on the derived information.

2. The system of claim 1,

wherein the authorization engine (18) comprises a first sub-engine (24) configured to determine a plurality of conditional probabilities based on a sample set of transaction records from the database (22), the conditional probabilities indicative of a probability of one or more realizations of one or more first transaction attributes under the condition of one or more realizations of one or more second transaction attributes, at least one of the one or more first transaction attributes related to a transaction request answer code.

3. The system of claim 2,
   wherein the authorization engine (18) comprises a second sub-engine (26) configured to select one from the plurality of conditional probabilities based on information contained in the received authorization request, determine a first checking result value ($v_1$) based on the selected conditional probability, and generate the authorization output based on the first checking result value.

4. The system of claim 3,
   wherein the second sub-engine (26) is configured to query the database (22) for information related to one or more transaction records including a specific payor account identifier that identifies a same account as a payor account identifier included in the received authorization request, and select one from the plurality of conditional probabilities based on this information.

5. The system of claim 4,
   wherein the second sub-engine (26) is configured to obtain information on a transaction request answer code included in one or more transaction records having the specific payor account identifier from the database (22).

6. The system of claim 4 or 5,
   wherein the second sub-engine (26) is configured to obtain information on one or more transaction parameters included in one or more most recent transaction records having the specific payor account identifier from the database (22).

7. The system of one of claims 2 to 6,
   wherein the first sub-engine (24) is configured to re-determine one or more of the plurality of conditional probabilities every predetermined time interval.

8. The system of one of claims 2 to 7,
   wherein the first sub-engine (24) is configured to re-determine one or more of the plurality of conditional probabilities whenever a predetermined number of transaction records have been newly registered in the database (22).

9. The system of one of claims 2 to 8,
   wherein at least one of the one or more second transaction attributes is related to the transaction request answer code of a temporally later second-type payment transaction and at least one of the one or more second transaction attributes is related to the transaction request answer code of a temporally earlier second-type payment transaction.

10. The system of one of claims 2 to 9,
    wherein at least one of the one or more second transaction attributes is related to one or more of the following: a transaction amount, a transaction time, a transaction date, a transaction time difference between two second-type payment transactions, a transaction date difference between two second-type payment transactions, a location area, and a merchant type.

11. The system of one of claims 3 to 10,
    wherein the second sub-engine (26) is configured to determine a second checking result value ($v_2$) from a comparison of a payor account identifier included in the received authorization request against a stored list of account identifiers and generate the authorization output based on a weighed sum of the first and second checking result values ($v_1$, $v_2$).

12. The system of one of the preceding claims,
    further comprising a host (14) configured to receive authorization requests for first-type payment transactions and second-type payment transactions, forward the authorization requests for first-type payment transactions to the authorization engine (18), and route the authorization requests for second-type payment transactions to a remote further transaction authorization system (20), wherein the host (14) is coupled to the database (22) and is configured to register a transaction record for every requested second-type payment transaction in the database.

**13.** A transaction authorization method, comprising:

- receiving a request for authorization of a first-type electronic payment transaction,
- providing a database (22) storing a plurality of transaction records for second-type electronic payment transactions,
- deriving information from one or more of the transaction records stored in the database,
- performing an analysis in relation to the received authorization request based on the derived information, and
- generating an authorization output based on the analysis.

**14.** The method of claim 13,
wherein the deriving includes determining a plurality of conditional probabilities based on a sample set of transaction records stored in the database (22), the conditional probabilities indicative of a probability of one or more realizations of one or more first transaction attributes under the condition of one or more realizations of one or more second transaction attributes, at least one of the one or more first transaction attributes related to a transaction request answer code.

**15.** The method of claim 14,
wherein the performing includes selecting one from the plurality of conditional probabilities based on information contained in the received authorization request and determining a first checking result value based on the selected conditional probability.

**16.** The method of claim 15,
wherein the performing includes querying the database (22) for information related to one or more transaction records including a specific payor account identifier that identifies a same account as a payor account identifier included in the received authorization request, and selecting one from the plurality of conditional probabilities based on this information.

**17.** The method of claim 16,
wherein the performing includes obtaining information on a transaction request answer code included in one or more transaction records having the specific payor account identifier from the database (22).

**18.** The method of claim 16 or 17,
wherein the performing includes obtaining information on one or more transaction parameters included in one or more most recent transaction records having the specific payor account identifier from the database.

**19.** The method of one of claims 14 to 18, further including:

re-determining one or more of the plurality of conditional probabilities every predetermined time interval.

**20.** The method of one of claims 14 to 19, further including:

re-determining one or more of the plurality of conditional probabilities whenever a predetermined number of transaction records have been newly registered in the database.

**21.** The method of one of claims 15 to 18,
wherein at least one of the one or more second transaction attributes is related to the transaction request answer code of a temporally later second-type payment transaction and at least one of the one or more second transaction attributes is related to the transaction request answer code of a temporally earlier second-type payment transaction.

**22.** The method of one of claims 14 to 21,
wherein at least one of the one or more second transaction attributes is related to one or more of the following: a transaction amount, a transaction time, a transaction date, a transaction time difference between two second-type payment transactions, a transaction date difference between two second-type payment transactions, a location area, and a merchant type.

**23.** The method of one of claims 15 to 22,
wherein the performing includes determining a second checking result value from a comparison of a payor account identifier included in the received request against a stored list of account identifiers, and wherein the generating includes generating the authorization output based on a weighed sum of the first and second checking result values.

24. The method of one of claims 13 to 23, further including:

receiving, at a host (14), authorization requests for first-type payment transactions and second-type payment transactions, forwarding the authorization requests for first-type payment transactions to the authorization engine (18), routing the authorization requests for second-type payment transactions from the host (14) to a remote further transaction authorization system (20), and registering, by the host (14), a transaction record for every requested second-type payment transaction in the database (22).

25. A computer-readable information storage medium, the medium storing program code means adapted to effect, when executed by a computer system, execution of a method as claimed in one of claims 13 to 24.

26. A signal transmitted in a communications system, the signal embodying program code means adapted to effect, when executed by a computer system, execution of a method as claimed in one of claims 13 to 24.

Fig. 1

## Fig. 2

TO

|      | AB  | AC  | AD    | AE | AF    | AG | AH  | AI   | NA | AA      | OT   |
|------|-----|-----|-------|----|-------|----|-----|------|----|---------|------|
| AB   | 315 | 0   | 7     | 0  | 6     | 0  | 0   | 0    | 0  | 111     | 2    |
| AC   | 0   | 281 | 5     | 0  | 4     | 0  | 1   | 0    | 0  | 71      | 1    |
| AD   | 30  | 16  | 8086  | 0  | 184   | 0  | 11  | 1    | 0  | 6225    | 26   |
| AE   | 0   | 0   | 0     | 0  | 0     | 0  | 4   | 0    | 0  | 0       | 0    |
| AF   | 8   | 13  | 321   | 1  | 3104  | 0  | 1   | 619  | 0  | 21808   | 24   |
| AG   | 0   | 0   | 0     | 0  | 0     | 20 | 0   | 0    | 0  | 2       | 0    |
| AH   | 0   | 1   | 2     | 0  | 3     | 0  | 103 | 0    | 0  | 48      | 0    |
| AI   | 9   | 0   | 8     | 6  | 26    | 0  | 12  | 279  | 0  | 405     | 0    |
| NA   | 136 | 381 | 4727  | 2  | 11083 | 57 | 79  | 228  | 0  | 443763  | 855  |
| AA   | 210 | 79  | 7262  | 0  | 13187 | 1  | 60  | 128  | 0  | 880455  | 1302 |
| OT   | 0   | 2   | 44    | 0  | 25    | 0  | 0   | 0    | 0  | 1341    | 1200 |
|      | 780 | 773 | 20462 | 9  | 27622 | 78 | 271 | 1255 | 0  | 1354229 | 3410 |

F
R
O
M

# Fig. 3

EP 1 710 762 A1

TO

FROM

|      | AB     | AC     | AD     | AE    | AF     | AG     | AH      | AI     | NA    | AA     | OT     |
|------|--------|--------|--------|-------|--------|--------|---------|--------|-------|--------|--------|
| AB   | 71,43% | 0,00%  | 1,59%  | 0,00% | 1,36%  | 0,00%  | 0,00%   | 0,00%  | 0,00% | 25,17% | 0,45%  |
| AC   | 0,00%  | 77,41% | 1,38%  | 0,00% | 1,10%  | 0,00%  | 0,28%   | 0,00%  | 0,00% | 19,56% | 0,28%  |
| AD   | 0,21%  | 0,11%  | 55,46% | 0,00% | 1,26%  | 0,00%  | 0,08%   | 0,01%  | 0,00% | 42,70% | 0,18%  |
| AE   | 0,00%  | 0,00%  | 0,00%  | 0,00% | 0,00%  | 0,00%  | 100,00% | 0,00%  | 0,00% | 0,00%  | 0,00%  |
| AF   | 0,03%  | 0,05%  | 1,24%  | 0,00% | 11,99% | 0,00%  | 0,00%   | 2,39%  | 0,00% | 84,20% | 0,09%  |
| AG   | 0,00%  | 0,00%  | 0,00%  | 0,00% | 0,00%  | 90,91% | 0,00%   | 0,00%  | 0,00% | 9,09%  | 0,00%  |
| AH   | 0,00%  | 0,64%  | 1,27%  | 0,00% | 1,91%  | 0,00%  | 65,61%  | 0,00%  | 0,00% | 30,57% | 0,00%  |
| AI   | 1,21%  | 0,00%  | 1,07%  | 0,00% | 3,49%  | 0,00%  | 1,61%   | 37,45% | 0,00% | 54,36% | 0,00%  |
| NA   | 0,03%  | 0,08%  | 1,02%  | 0,00% | 2,4%   | 0,01%  | 0,02%   | 0,05%  | 0,00% | 96,20% | 0,19%  |
| AA   | 0,02%  | 0,01%  | 0,80%  | 0,00% | 1,46%  | 0,00%  | 0,01%   | 0,01%  | 0,00% | 97,54% | 0,14%  |
| OT   | 0,00%  | 0,08%  | 1,68%  | 0,00% | 0,96%  | 0,00%  | 0,00%   | 0,00%  | 0,00% | 51,34% | 45,94% |

European Patent
Office

**EUROPEAN SEARCH REPORT**

Application Number

EP 05 00 7802

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | WO 03/085581 A (DATAWAVE SYSTEMS, INC; KNOX, DAVID; EMANUEL, JOSH) 16 October 2003 (2003-10-16) * abstract * * page 4, lines 7-26 * * page 5, lines 11-33 * * page 6, lines 12-27 * * page 7, line 29 - page 8, line 2 * * page 9, lines 1-13 * * page 10, line 17 - page 11, line 32 * * page 13, line 2 - page 14, line 4 * * figure 1 * ----- | 1-26 | G07F19/00 |
| X | US 6 658 393 B1 (BASCH CATHERINE A ET AL) 2 December 2003 (2003-12-02) * abstract * * column 3, line 53 - column 4, line 19 * * column 5, lines 6-18 * * column 5, line 64 - column 6, line 41 * * column 6, line 64 - column 7, line 15 * * column 7, line 30 - column 8, line 29 * * column 9, lines 49-58 * ----- | 1-26 | TECHNICAL FIELDS SEARCHED (Int.Cl.7)<br><br>G07F |
| X | PRESTON FAYKUS - WESTERN BANKING MAGAZINE: "How to protect against debit card fraud? Integrating proactive solutions to mitigate loss." INTERNET ARTICLE, [Online] December 2003 (2003-12), XP002332777 Retrieved from the Internet: URL:http://www.wib.org/wb_articles/tech_ou tsouce_dec03/debit_fraud_dec03.htm> [retrieved on 2005-06-21] * the whole document * ----- | 1-26 | |

The present search report has been drawn up for all claims

| Place of search | Date of completion of the search | Examiner |
|---|---|---|
| The Hague | 21 June 2005 | Breugelmans, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 7802

This annex lists the patent family members relating to the patent documents cited in  the above-mentioned European search report.
The members are as contained in the European Patent Office EDP file on
The European Patent Office is in no way  liable for these particulars which are merely  given for the purpose of information.

21-06-2005

| Patent document cited in search report | | Publication date | Patent family member(s) | | Publication date |
|---|---|---|---|---|---|
| WO 03085581 | A | 16-10-2003 | US | 2002194122 A1 | 19-12-2002 |
| | | | AU | 2003217732 A1 | 20-10-2003 |
| | | | CA | 2477937 A1 | 16-10-2003 |
| | | | GB | 2402244 A | 01-12-2004 |
| | | | WO | 03085581 A1 | 16-10-2003 |
| US 6658393 | B1 | 02-12-2003 | US | 6119103 A | 12-09-2000 |
| | | | AU | 756154 B2 | 02-01-2003 |
| | | | AU | 7696798 A | 30-12-1998 |
| | | | CA | 2291098 A1 | 03-12-1998 |
| | | | EP | 0985189 A1 | 15-03-2000 |
| | | | WO | 9854667 A1 | 03-12-1998 |

EPO FORM P0459

For more details about this annex : see Official Journal of the European Patent Office, No. 12/82